# EUROPEAN PATENT SPECIFICATION

(11) **EP 2 318 488 B1**
(45) Date of publication and mention of the grant of the patent: **04.10.2017**
(21) Application number: 09802601.6
(22) Date of filing: 28.07.2009
(51) Int. Cl.: C10L 5/46, C10L 5/48

(54) **METHOD FOR PROCESSING A MIXTURE OF CELLULOSE/PLASTIC WASTE PARTICLES TO FORM A FUEL**
VERFAHREN ZUR VERARBEITUNG EINER MISCHUNG AUS CELLULOSE-/KUNSTSTOFFSCHMUTZPARTIKELN AUS EINEM BRENNSTOFF
PROCÉDÉ DE TRAITEMENT D'UN MÉLANGE DE PARTICULES DE DÉCHETS DE CELLULOSE/PLASTIQUE POUR FORMER UN COMBUSTIBLE

(30) Priority: 31.07.2008 NL 1035778
(43) Date of publication of application: 11.05.2011
(73) Proprietor: Subcoal International B.V., 9936 TH Farmsum (NL)
(72) Inventor: NAFID, Mohammed, 1101 BP Amsterdam (NL); KOEKKOEK, Ralph, 1101 BP Amsterdam (NL)
(74) Representative: Hoyng Rokh Monegier LLP
(86) International application number: PCT/IB2009/053281
(87) International publication number: WO 2010/013202

(56) References cited:
- WO-A-2006/041439
- WO-A1-2008/012951
- WO-A2-2007/145507
- US-A- 4 298 350
- US-A- 5 265 979
- US-A1- 2005 274 067
- US-B1- 6 692 544

## Description

The present invention concerns a method for processing a mixture of cellulose/plastic waste particles comprising cellulose and thermoplastic materials into a material particularly suitable as fuel.

Cellulose/plastic waste mixtures originate for example from domestical, urban, or municipal waste and from industrial waste. However, this stream comprises inert material, in particular sand. Also, there exists waste from a paper recycling process. In the latter case the waste mixture, the so-called reject stream, is obtained after pulping and separating out the paper pulp in the paper recycling process, and still comprises, in addition to plastic, paper waste.

Cellulose/plastic waste mixtures may be processed into useful fuel, preferably secondary fuel that is used as the primary fuel for incinerators in addition to coal. In order to obtain a combustible material, the treatment of the cellulose/plastic waste mixture comprises several purification steps. With the waste streams from the paper processing - containing a lot of water - part of the water is removed from the cellulose/plastic waste mixture by pressure and a further part by evaporation. The dried mixture may be incinerated as such (as fluff), but preferably, this mixture is converted into fuel pellets, for example according to EP A 1 083 212.

Irrespective whether the fuel stream is used as fluff or in the form of pellets, for use as fuel it is important that only a small amount of ash-forming waste material is present and that the product is well dried. Preferably, the material has a low chlorine content, for preventing the formation of toxic dioxins and/or corrosive hydrogen chloride in the incineration process.

An object of the invention is to provide an optimized method for obtaining a cellulose/plastic product having a good caloric value, a low ash content, and a low chlorine content.

This goal is achieved with a method for processing a mixture of cellulose/plastic waste particles comprising cellulose and thermoplastic materials, and wherein the cellulose and thermoplastic material constitutes at least 60 weight% of the waste mixture and wherein the thermoplastic material constitutes at least 20 weight% of the total weight of the waste mixture, which method comprises the following steps :
(a) drying the cellulose/plastic waste mixture by treatment with a medium with a temperature in the range of 50 to 150 °C, wherein the water content is reduced to 15 weight% or less;
(b) wherein the exit temperature of the drying medium has a temperature of 115 °C or less,
(c) feeding the dried cellulose/plastic waste mixture to a purification stage, and
(d) subjecting the dried cellulose/plastic waste mixture to the operation of the purification stage, wherein the purification stage comprises a wind separator, a sieve, a metal separator, a separator for separating out chlorine-containing components, or a combination thereof.

It is common to include a drying step at the end of a treatment process, because at that point the most purified fraction is dried, and drying is a step which requires a lot of energy, and hence, is relatively expensive. Examples thereof are US-A-2003/0021991 and GB-A-2324394. In the process according to the present invention, the dryer is situated relatively early in the process. This appears to have the major advantage that the separations that occur after the dryer, appear to be performed with a significant larger resolution. As such, it is possible to obtain a relatively pure fuel in an efficient process.

### Short description of the figure:

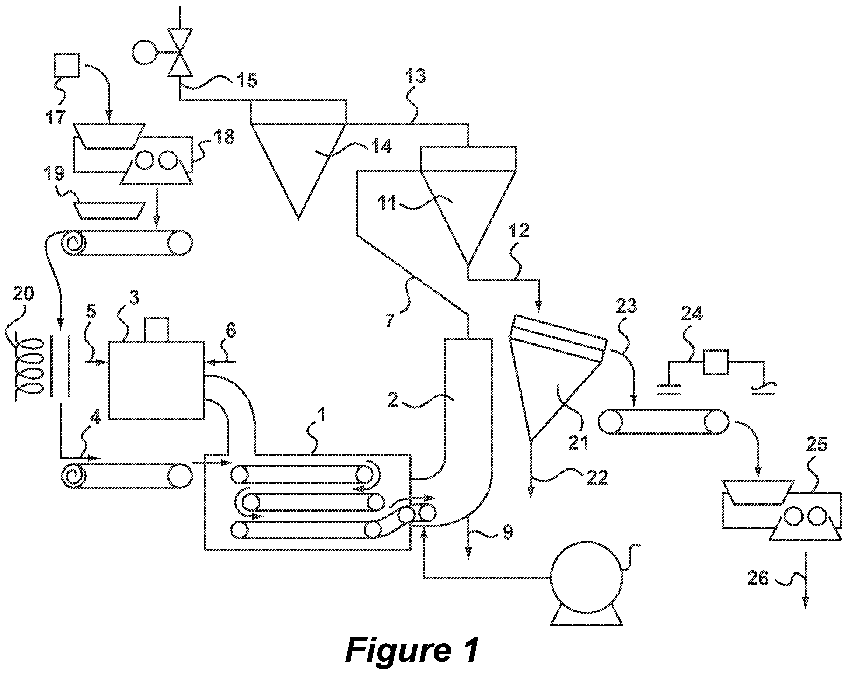

Figure 1 is an representation of a treatment scheme for waste streams in order to obtain fluff material that may be used as fuel or that may be further processed into fuel pellets.

The mixture of cellulose/plastic waste particles for use in the present method may be any waste mixture comprising cellulose- and thermoplastic materials. Cellulose and thermoplastic materials constitute the bulk of the components of the waste mixture, and they constitute in total at least 60 weight% of the waste mixture, more preferably at least 70 weight%, and most preferably at least 80 weight%, based on the total amount of solid components. However, pre-treated waste streams may be used comprising about 90 weight% or more, or even about 95 weight% of cellulose/plastic waste material.

In a first preferred embodiment of the invention, a waste stream is used which is obtained from municipal waste (MSW, municipal solid waste). Such a stream contains in general 15-30 % of moisture, and usually 20-25% of moisture. Furthermore, this stream contains relatively much inert material, usually about 15 weight% or more, and usually 15-20 weight%. Also, this stream may contain some organic material which may be considered equivalent to cellulose fibre for the purpose of this invention. Preferably, the organic component of the waste material (exclusively waste based on cellulose, such as paper and cardboard) amounts to less than 20 weight%, preferably less than 10 weight%, and more preferably less than 5 weight%.

In a second preferred embodiment of the invention a waste stream is used which is obtained from paper recycling waste. Such a stream contains in general 30-65 weight% of moisture, and usually 40-60 weight% of moisture. Additionally, this stream contains relatively a lot of chlorine-containing material, usually about 1 weight% or more, and usually 1-2 weight%, but sometimes even 2.5 weight% or more. The amount of inert material is generally less than in MSW, and is in general less than 15 weight%, and usually less than 10 weight% (on dry matter basis).

It is not uncommon to mix waste streams, and for example to add paper rejects to the MSW waste. However, for obtaining relatively pure combustible materials, this is not preferred, since in this way a final material is obtained with both too much inert parts, and a too high chlorine content. Nevertheless, such a mixed stream can be made suitable in an efficient process as a relatively pure fuel with the method according to the invention.

In a preferred embodiment of the present invention waste streams are treated before going to the drying step.

Preferably, at least heavy, large and/or non-combustible material is removed, such as large stones, concrete, pieces of metal, carpets and the like. For that purpose sieving may be appropriate, but also manual sorting on a sorting belt. With paper reject waste streams this step is in general not necessary. Furthermore, from waste treatment companies waste streams are available that lack such material. Preferably, the large metal parts may be removed at this stage with a magnet and an Eddy-current system.

In a further pre-processing step the waste is treated in a shredder to obtain particle material of a certain size, such as for example all parts smaller than 200 mm, preferably about 150 or less, such as, for example about 100, about 120 or about 80 mm. In general, the size is given as a length, which implies that 95 weight% of the material has a maximum size in one dimension of the given length. It is possible to cut the material in still smaller pieces (for example less than 50 mm), but this is not preferred because of the presence of solid material residues, such as glass, stone, etc., which lead to excess wear and which may damage the shredder. In this stage of the method, the cutting occurs in general into pieces of about 60 mm or more, preferably about 80 mm or more. Of course, the waste stream will always still contain smaller parts, but these are not necessarily cut up in the shredder.

The inventors have found that the removal of chlorine-containing foil parts can be performed very efficiently when a dried waste stream is subjected to this separation step. The separation step preferably comprises an optical sorting of chlorine containing foil or parts. For example a NIR analysis-apparatus locates chlorine comprising components on a belt, after which an automatic removal device specifically takes out the plastic parts. The removal device can be pressurized air, blowing the pieces of plastic from the belt, or a picking device. Additionally, for an efficient separation, preferably the size of the foil parts is about 60 mm or more. Usually, the size will be smaller than 25 cm, preferably about 15 cm or less. Many smaller parts, such as smaller than 30 mm may also be purified, however, it is more difficult to achieve an efficient purification.

Preferably, the separated stream has a chlorine content of about 30 % or more. PVC has a chlorine content of about 56 %, and a separated stream with about half of it being PVC gives a good balance between a high processing speed, a good purification and little loss of good material.

In general, the cellulose/plastic waste mixture originates from domestic waste (including municipal and urban waste) and/or industrial waste streams. The cellulose material may originate from for example paper, cardboard, cardboard cups, wood, diapers, bandages, and textile, such as cotton, viscose and rayon. The cellulose material may comprise organic material, such as bread, meat and vegetable waste etc., which are in fact treated as cellulose fibre.

The thermoplastic material may originate from for example packaging material such as polymeric foil material. In principle all types of thermoplastic polymers may be present in the cellulose/plastic mixture. Examples of thermoplastic polymers which are in general present, are (substituted) polyolefins; polystyrene; polyesters, such as polyethene terephtalate (PET); polyamides, and copolymers and mixtures thereof. The thermoplastic material may also include halogenated polymers such as poly(vinylchloride) (PVC), although this is not preferred. In a preferred embodiment, most of the chlorine-containing polymer material is removed.

The method according to the present invention is especially suitable when the thermoplastic material in the cellulose/plastic waste mixture is mainly based on polyethene homo and/or copolymers. Usually, the thermoplastic material comprises for at least 60 weight%, preferably at least 70 weight%, more preferably at least 75 weight% and most preferably at least 80 weight% of polyethene homo and/or copolymers. The method according to the present invention is also very suitable in situations wherein the cellulose material in the cellulose/plastic waste mixture is predominantly based on paper and/or cardboard.

An industrial waste stream which is preferably applied for obtaining a cellulose /plastic waste mixture for use with the present invention, is the paper reject stream which is obtained after separating out the majority of the paper pulp in the paper recycling process. As with municipal waste streams, this waste stream contains plastic foils, stones, metal, sand and other undesirable materials.

The actual composition boundaries of the mixture depend on the initial moisture content of the mixture and the desired moisture content of the mixture when it leaves the dryer.

In a particulate embodiment, the method according to the present invention is useful for a cellulose/plastic waste mixture wherein there is a shortage of thermoplastic material. The lower boundary for thermoplastic material is at least 20 weight%, and preferably at least 30 weight% with respect to the total weight of the waste mixture.

In another embodiment of the invention the method according to the present invention is useful for cellulose/plastic mixtures wherein the content of thermoplastic material is at least 40 weight%.

In the latter embodiment both a low caloric and a high-caloric fuel may be obtained from the cellulose/plastic waste mixture. It may be advantageous, prior to the treatment according to the present invention, to remove potentially valuable thermoplastic material at least partly from a cellulose/plastic waste mixture with a thermoplastic material content of at least 40 weight%, such that a mixture is obtained which comprises less than 40 weight% of thermoplastic material. Alternatively, in some cases it may be desirable, prior to the treatment according to the present invention, to add some thermoplastic material, usually chlorine-free, to increase the caloric value of the fuel obtained from the cellulose/plastic waste mixture, and/or to lower the chlorine content of the cellulose/plastic waste mixture.

In still another embodiment the method according to the present invention is useful for a cellulose/plastic waste mixture wherein the cellulose represents 30 to 60 weight% and the thermoplastic material represents 70 to 40 weight%. There is a specific need for an efficient treatment of such a mixed waste stream because it is difficult to separate out cellulose or plastic in an efficient manner.

Apart from cellulose and thermoplastic materials, the mixture of cellulose/plastic waste particles for use in the present method comprises also other materials, such as metals, stones, for example sand, ceramic material or glass. It is an advantage of the present method that these contaminants can be efficiently removed because they may impede the further processing of the cellulose/plastic waste mixture, for example a pelletizing step and to obtain a useful fuel. Since these materials cannot burn (hereafter also called not-combustible materials), they decrease the caloric value of the fuel and increase the ash content. The cellulose/plastic waste mixture may also contain thermo hardening materials, which are usually combustible and therefore do not need to be removed.

Usually, the water content of the mixture of cellulose/plastic waste particles to be used with the present method comprises about 15 weight% or more, based on the total weight of the cellulose/plastic waste mixture. In general, the waste streams contain 20-65 weight% of water, usually depending on the source, the storage and the amount of cellulose material. If the water content of the mixture of cellulose/plastic waste particles is too low (for example less than 15 weight%), the temperature of the waste mixture leaving the dryer can cause the surfaces of the apparatus to get smeared with molten plastic. If the water content of the mixture of cellulose/plastic waste particles amounts to more than 40 weight%, for example, if it originates from a paper recycling process, the mixture is preferably pre-treated by mechanical pressing to reduce the water content prior to the drying in step (a). Because of this, the excessive use of energy for the vaporisation of the water in step (a) is avoided.

With a mechanical dewatering step, a dewatering up to about 20-50 weight% is possible. Preferably the water content of the cellulose/plastic waste mixture entering step (a) of the present method, is at most 45 weight%, more preferably at most 40 weight%, still more preferably at most 35 weight% and most preferably about 30 weight% or less. With a mechanical treatment of paper reject streams it is generally possible to achieve a water content of about 45 weight%, preferably 40 weight% or less, and more preferable about 30 weight%, for example 25-35 weight%.

The drying step (a) comprises the step of thermal drying the cellulose/plastic waste mixture by treatment with a medium with a temperature of about 150 °C or less, preferably about 145 °C or less. The temperature of the medium is about 50 °C or more.

An important advantage of the method according to the invention is that residual heat may be used very efficiently. Residual heat in factories mostly has the form of hot water and/or low or medium pressure steam (<10 bar or <2 bar steam), or the form of warm exhaust gasses. In the event the residual heat is present in water or steam, advantageously the heat may be converted into hot gas (such as for example hot air) by means of heat exchangers. Hot exhaust gasses may be mixed with the heating medium or may be directly fed (as the drying medium) to a drying bed. In an alternative embodiment the warm/hot water or steam flows and/or warm exhaust gas may be used for indirect heating, wherein a surface is heated, wherein the surface is used to heat and dry the material. In the latter case the heated surface is the drying medium.

The medium may be heated gas, or a heated surface, or a combination of both.

This step in the method according to the present method may be carried out in any apparatus suitable for drying a water-containing mixture of cellulose/plastic particles. Advantageously, drying is effected by heating using a gaseous medium, which is denoted as direct heating. Optionally, instead of, or in combination with indirect heating, direct heating (by means of heating through the wall of the container/contact area) may be used.

Examples of suitable apparatus for drying the mixtures comprise conveyer dryers, rotary dryers, fluidized bed or spray dryers and drum dryers. Preferably, conveyer or rotary dryers are used.

In a preferred embodiment of the invention, a conveyer dryer is applied if the input drying medium has a temperature of about 115 °C or less. At this relatively low temperature the drying time is no longer critical, at least plastic material will not melt such that the molten plastic will smear the surface of the equipment, and it does not need to be controlled on this parameter.

In a second preferred embodiment of the invention a conveyer dryer is applied with an input drying medium with a temperature of 150 °C, wherein the temperature of the exit medium is controlled, such that it is less than 115 °C. This may simple be done by a relatively high air velocity, a relatively defined residence time of the mixture to be dried, and preferably by the application of counter-current.

In still another preferred embodiment of the invention, preferably a rotary dryer is applied if the input drying medium has a temperature of about 110 °C or more. In a rotary dryer it is very well possible to control the residence time of the solid substance, and of the medium in such a way, that the exit temperature of the drying medium is less than about 115 °C.

Preferably, the exit temperature in the aforementioned cases is about 110 °C or less, more preferably, about 100 °C or less.

It is of course also possible to apply combinations of dryers, such as for example firstly a conveyer dryer, and subsequently a rotary dryer, or firstly a rotary dryer, and subsequently a conveyer dryer.

In a preferred embodiment the cellulose/plastic waste mixture and a gaseous medium are transported through a dryer in a direct current mode. The cellulose/plastic waste mixture and the hot gaseous medium enter at one side and leave the dryer in combined streams at the other side. This setup is preferred if a gaseous medium is used with a temperature of about 110 °C or more in a rotary dryer. In this way, premature melting of plastic fractions is prohibited.

In another preferred embodiment of the invention, the cellulose/plastic mixture and a gaseous medium are transported through a dryer in a counter-current mode. This has the advantage of a more efficient drying. This embodiment is particularly preferred if the temperature of the gas is 115 °C or less. With higher temperatures of the drying medium a counter-current design is also possible, but in that case the residence time must be sufficiently short in order not to let the temperature of the dried mixture increase too much.

Preferably, drying is achieved in an about horizontally oriented conveyer dryer or rotary dryer. "About horizontal orientation" comprises horizontal orientation of the conveyer or rotary and a slight downward inclination in the direction of the flow of the material to be dried under an angle of maximum 20°.

In a preferred embodiment of the invention the dryer is designed to achieve a residence time of the particle material of about 5 minutes or more, more preferably about 10 minutes or more, such as for example about 5, 8, 10, 12 or 30 minutes. For economic reasons generally a residence time of about 12 hours or less is used, preferably a residence time of less than 4 hours. Since the cost of residual heat which is preferably used, is low, the residence time is of less importance. Of course, investment costs should remain low enough for an economic process. A number of apparatus is suitable for this purpose.

In a further preferred embodiment of the invention, the residence time of the gaseous medium is about 10 seconds or more, preferably about 30 seconds or more. In general a residence time of about 15 minutes or less is used or to achieve a suitable drying, preferably about 3 minutes or less, en still more preferably about 100 seconds or less.

Preferably, such an amount of heated medium is added, such as heated air or effluent gas, that the air velocity is about 0.2 m/s or more, preferably 0.5 m/s or more. In general, the air velocity will be about 4 m/s or less, preferably about 2 m/s or less.

To achieve optimum circumstances for the evaporation process in the drying apparatus, the content is preferably mechanically mixed, vibrated or stirred. This may be achieved, depending on the type of dryer, for example by means of rotation, by means of an internal rotating stirrer, a vibrating conveyer or by injection of air.

The gaseous medium used in the drying step (a) of the present method ; or the indirectly heated medium such as for example the surface of a rotary, has an initial temperature of about 150 °C or less, preferably 145 °C or less.

In a preferred embodiment the maximum temperature of the gaseous medium and the cellulose/plastic waste mixture is 120 °C or less, more preferably 115 °C or less. Preferably, the input temperature of the gaseous medium is at least 80 °C. A temperature within this range results in an efficient drying while an undesirable melting of plastic materials is prohibited.

Optionally, for the purpose of drying, use can also be made of a heated gas, wherein heating is achieved by combustion of for example a hydrocarbon. Origin and composition of the gaseous medium used for drying in step (a) may be selected at will. It goes without saying that the gaseous medium preferably lacks other components which may react with the cellulose/plastic waste mixture. The gaseous medium is preferably obtained by burning a hydrocarbon with air. Preferably, this hydrocarbon is natural gas or liquefied petroleum gas (LPG), coal or recycled fuel pellets, such as for example polyethene pellets. The addition of fuel may be particularly preferred, if a relatively wet stream needs to be dried (such as paper rejects), when only little, or low-caloric residual heat is available.

In the drying step (a) the water content of the cellulose/plastic waste mixture is reduced to 15 weight% or less, preferably the water content is reduced to a value of about 10 weight% or less, more preferably the water content is reduced to a value of about 7.5 weight% or less, and most preferably to a value of about 5 weight% or less. In general, the amount of water is about 1% or more, since it is - from an economic point of view - not attractive to continue drying. Preferably, the amount of residual moisture is about 2 weight% or more. A nearly dry product is important for further treatment of the waste stream. By thoroughly drying it becomes possible to purify the waste effectively in a further separation step.

The dried mixture of cellulose/plastic waste particles exiting the drying unit is transported to the purification stage in step (d).

The exit temperature of the medium, preferably a gaseous medium, depends on its input temperature and of the initial and final moisture content of the cellulose/plastic waste mixture and the exit temperature is in general about 115 °C or less, preferably 110 °C or less. Mostly, the exit temperature of the gaseous medium is at most 105 °C, and ranges preferably from 50 °C to 100 °C, more preferably 65 °C to 98 °C.

The purification stage comprises at least a wind separator, a sieve, a metal separator, a chlorine component separator or a combination thereof.

Preferably, the waste mixture leaving the dryer has a temperature of at most 110 °C, more preferably about 100 °C or less. With a maximum temperature of the waste mixture in this range, it is avoided that apparatus surfaces are getting smeared with melting polymer material.

In the method according to the present invention it is an important advantage that the particle mixture that enters the wind separator, the sieve, the metal separator or the chlorine-containing component separator, is dry and that particularly the cellulose material no longer sticks to the other materials in the mixture. This allows for a good separation, with definitively less loss of valuable cellulose and/or plastic material.

In preferred embodiment the waste mixture is transported into a wind separator, for example by blowing. If a gaseous medium is used for drying, it may (partly) form the carrier gas in a wind separator. This has the advantage that further drying can take place and that the amount of fresh air can be limited.

To have sufficient transport of the gaseous medium, preferably one or more ventilators are positioned in the process. Thus is may be preferable, for example, to position a ventilator at the inlet of the hot air flow, or behind the product separator. In both cases the ventilator is positioned in a location where relatively clean air must be moved. If additional air is necessary, preferably a fresh gaseous medium is added between the dryer and the wind separator, and an extra air supply is created by a ventilator at the input side of the wind separator, and preferably to blow in air.

In the wind separator the mixture of cellulose/plastic waste particles is distributed such that particles that are heavier (which have a higher density) than the particles made of cellulose and thermoplastic materials, are sedimented as a heavy fraction, whereas the particles made of cellulose and thermoplastic material provide for a light fraction which is mostly collected and is separated out of the gaseous medium by means of a cyclone downstream of the wind separator. Whether a discrete particle belongs to the light or heavy fraction is determined by the drag of the particle with the gaseous medium, which is again dependent of the mass and surface of the particle. The cut-off between the light and heavy fraction can be adapted at will, for example by controlling the velocity of the gaseous stream through the wind separator. The skilled person may empirically determine the adequate velocity of the gas flow to separate out a desired heavy fraction. If the velocity of the gaseous stream obtained from the drying step is insufficient, it may be necessary to increase the total volume of gas. Also, it is possibly to narrow the diameter of the wind separator and thus increase the velocity of the gas. Preferably, the gas velocity in the wind separator is about 10 m/s or more, more preferably about 15 m/s. In general the velocity is about 30 m/s or less, preferably about 25 m/s or less. At such velocities, such as for example 16 m/sec, 17 m/sec or 18 m/sec, the separation has shown to be optimal. In the most cases, the heavy material is not combustible and consists of stones, for example grit, metals, ceramic material, glass, and mixtures thereof. For reaching process effectiveness it is undesirable to remove all of the not-combustible and inert material. In particular, fine sand and glass fragments are blown through the separator. It can be removed in a next step in a sieve.

Before the separation step(s) after the wind separator, the cellulose/plastic fraction is still to be separated out from the gaseous medium. Preferably, this is achieved in a cyclone. In a cyclone these are separated out by the centrifugal force and difference in specific mass of the cellulose/plastic fraction and the gaseous medium. Normally speaking, a product separator is not a purification step in the sense of the present invention, since no contaminants or water are separated out from the cellulose/plastic mixture.

In another preferred embodiment of the method, a separation step (d) is carried out in a sieve. Optionally, a sieve may be positioned after a wind separator but it can also be applied a without wind separator. Although removal of fine, non-combustible material can be achieved using only a sieve operation, a first treatment of the waste stream with a wind separator is preferred. A wind separator proves to be efficient in removing heavy parts (among which also thick parts of PVC and PVDC) with a relatively small surface area per mass. However, glass fragments and small sand particles are more effectively removed from the well dried waste stream by means of sieving. Sieving does not appear very efficient with a wet stream, since sand and pulverized glass particles continue to stick to the cellulose and plastic materials. Reducing the amount of this material reduces not only the amount of inert material in the end product, but has also a positive impact on wear of downstream equipment.

Preferably, sieving is achieved with a sieve with a mesh width of 5 mm or less, preferably about 4 mm or less, and more preferably about 3 mm, although also larger and smaller mesh values may be used. The sieve may be for example a flat sieve, a vibrating sieve or a rotary sieve.

In the case of processing a MSW stream, the stream is preferably purified using wind separators and/or sieves, such that the stream comprises less than 15 weight% of inert material, preferably less than 10 weight%, and most preferably less than 8 weight%. With the method according to the invention it is well possible to reduce the amount of inert material with 30 % or more, more preferably with 50 % or more.

The same relative improvement is possible when processing paper rejects. Preferably, the processed stream contains 10 weight% or less of inert material, more preferably less than 8 weight%, and most preferably less than 7 weight%.

After drying (and preferably reducing the amount of inert material) the waste stream is preferably subjected to a sorting step wherein chlorine-containing polymeric parts (often polymeric foils) such as PVC and PVDC are removed or are further removed. This can be achieved with NIR-analysis apparatus (near-infrared) coupled to an automated removal system. With the present invention it is an advantageous to apply this step to the dried waste stream because the plastics and cellulose material do not stick together into large lumps. Furthermore, wet material appears to have a lower detection limit with the NIR, such that sorting of dry material is very effective. Most preferably, this step is applied onto a stream having plastic parts of 30 mm or more, preferably 50 mm or more. Often, the parts will be smaller than 200 mm or less, preferably 100 mm or less.

The chlorine-containing component separator is preferably applied to the processing of paper rejects, because the chlorine-containing plastic foils can be well separated out, and the latter waste stream contains a lot of chlorine-containing plastic foils. The present invention makes it possible to reduce the amount of chlorine in the waste stream with at least about 30%, preferably at least about 50%, and to obtain a stream with at most 1 weight% of chlorine. Preferably, a fuel with less than 0.8 weight% of chlorine is obtained.

In a further preferred embodiment the method comprises a further metal removal step. In the dried material, small metal particles, such as staples and paper-clips may now effectively be removed. Metal particles which are efficiently removed are iron, copper and aluminium. The metal separator may comprise a magnet, an Eddy-current apparatus, or a combination of both. By the application of this step, the stream is purified such that it comprises about 1 weight% or less, preferably less then 0.5 weight% or less, preferably about 0.2 weight% or less of the individual metals such as iron, aluminium or copper.

Although the dried and purified mixture obtained after the separation step can be used as such, for example in panel material for construction applications, preferably it is further processed into useful fuel, preferably secondary fuel.

Depending on the size of the particles in the waste stream, is may be preferred to further reduce the size of the particles. For use as secondary fuel, the cellulose/plastic waste mixture usually consists of particles with a particle size of about 80 mm or less, preferably about 50 mm or less, such as for example about 30 mm. Larger cellulose or thermoplastic particles, if present, can be cut (shredded) or otherwise reduced to the desired particle size.

Preferably, the fuel material of mixed waste obtained with a method according to the present invention has an energy content of about 18 GJ/ton or more, preferably about 20 GJ/ton or more, and more preferably about 22 GJ/ton or more. In general the caloric value is about 35 GJ/ton or less, preferably about 32 GJ/ton or less.

Further processing of the mixture of cellulose/plastic particles comprises among others compacting prior to storage. The latter compacting method is preferably carried out in a pelletizing device, which produces pellets with a diameter of at most 14 mm, more preferably at most 10 mm and most preferably at most 8 mm, such as for example 6 mm. A method which is well applicable, is described in EP-A-1 083 212 as well as in US-A-5.342.418. The thus obtained pellets can easily be stored and transported to another location for further use.

In another embodiment, compacting into pellets with a diameter of about 25 mm or less is performed in the form of soft pellets. Such pellets can be very well transported and may be used, for example, in cement kilns. Alternatively, the mixture is reduced to "fluff" and fed directly into the furnace or oven.

Preferably, the pellets thus obtained are used as secondary fuel in a combustion unit. This may be any unit, but one of the preferred possibilities is the use of these pellets is in a power plant fired with coal dust as the primary fuel. To be suitable as secondary fuel in combination with coal dust, the pellets should be pulverized. For this reason the pellets are preferably pulverised in a further step before they are used as secondary fuel. Advantageously, the pellets are grinded using a fluidized air mill. By the implementation of an integrated method according to the present invention (i.e. transporting pelletized secondary fuel and pulverizing it on location into powder for combustion) the infrastructural problems of the treatment of the fluff material of the drying process are overcome : ease of transport of the dried mixture and easy mixing with the primary fuel of a combustion unit.

A further advantage of the present invention may be achieved by positioning the drying process and a combustion unit close to each other. In this way, a part of the heat generated in the combustion unit may be used for preheating and/or drying of the cellulose/plastic waste mixture and/or the gaseous medium.

### DETAILED DESCRIPTION OF THE FIGURE:

Figure 1 is a schematic view of a treatment diagram for waste streams in order to obtain fluff material that can be used as fuel or that can be processed further into fuel pellets. In Figure 1 is (1) the conveyer dryer in a closed space ; however, this drying apparatus may also be a rotary dryer. The conveyer dryer is connected with a wind separator (2). In the heat exchanger (3) the drying gas may be heated with effluent gas or steam, which enters via line (6). The drying gas is mostly fresh air (5). The heated gaseous medium enters the dryer (in direct or counter-current mode), whereas via line (4) a wet stream of waste particles enters. As a result of the drying and the wind separation, a stream of particle material is blown through line (7) which has been stripped of heavy, non-combustible material. Heavy, non-combustible material is optionally collected from the bottom of a rotating rotary dryer and further from the bottom of the wind separator (9). The main stream is transported by the action of a transport ventilation system (not drawn); for that purpose ventilators may be positioned in front of the dryer in the input air flow and behind the cyclone (14). The stream is provided with extra air by a ventilator (10) to increase the air flow in the wind separator. The particle material from the stream is separated out from the gaseous medium in one or more cyclones (11). The waste stream with dry and purified cellulose and plastic particles is further processed by means of line (12). The gaseous medium (13) is stripped of dust in one or more cyclones (14) and a drain stream is purified in (15) before it is blown into the air.

At the inlet side a container or hopper (17) is located for the incoming waste stream, which is reduced in the shredder (18) to, for example, a particle size of less than 150 mm, preferably less than 100 mm. Subsequently, the stream is subjected to a separation of large metal parts with magnets (19) and an Eddy-current system (20). Behind the dryer/wind separator and product separator (11) the stream (12) is sifted over a sieve (21) with a mesh size of 3-4 mm, which separates sand and glass fragments (22) from the cellulose/plastic mixture (23). The cellulose/plastic mixture may be subjected to PVC-sorting by means of an automated sorting device (24). Also, is may be advantageous to again conduct a metal separation (not represented), since now, even staples and other little metal parts can be separated out. The now purified mixture may be used as such, but is preferably further reduced into particles of, for example, less than 30 mm or less than 40 mm in shredder (25). The thus obtained fluff stream (26) can be used as such, but can also very advantageously be used in a pelletizing method such as, for example, described in EP 1083212.

The invention is further described by means of the following examples, which cannot be taken as a restriction of the invention.

### EXAMPLES 1-4

A feed, mainly consisting of contaminated paper and plastic, which originates from municipal waste with 21 weight% of water and 19 weight% of inert material, is reduced into pieces of about 100 mm or smaller. The waste stream is fed through a magnet and an Eddy-current system to remove large metal parts thereof. The stream is transported to a conveyer dryer. Generally, the heated dryer gas has a temperature of less than about 150 °C, but more than about 50 °C. As conveyer dryer, a conveyer is used of about 90 meters long (in 3 conveyers of 30 meter long, positioned on top of each other) and with a width of 4 meter. The dryer gas is heated in a heat exchanger wherein low or medium pressure steam of 2 or 10 bar is cooled down, at an air supply of 150,000 - 200,000 normal cubic meters per hour. The drying gas is transported in counter-current over the material to be dried. The dried waste is fed into a wind separator. Heavy particles are collected on the bottom, while the light fraction, mainly consisting of cellulose fibres and plastic, is collected in two cyclones. The product output is about 8 ton/h. Gas from the two main product cyclones is purified over dust cyclones. Table
1 shows some experimental data. In the data, the inert material is left out of consideration, since the heat capacity of the inert material is very low and it generally does not contain any moisture.

**Table 1**

| Parameter | Ex.1 | Ex.2 | Ex.3 | Ex.4 |
|---|---|---|---|---|
| Product supply | | | | |
| Paper (weight%) | 31 | 31 | 31 | 31 |
| Moisture (weight%) | 21 | 21 | 21 | 21 |
| Plastic (weight%) | 32 | 32 | 32 | 32 |
| Inert (weight%) | 16 | 16 | 16 | 16 |

| Dryer inlet | | | | |
|---|---|---|---|---|
| Gas temp. (°C) | 100 | 145 | 145 | 80 |
| Gas flow (kNm³/h) | 150 | 150 | 150 | 150 |

| Dryer outlet | | | | |
|---|---|---|---|---|
| Product temperature (°C) | 66 | 87 | 85 | 58 |
| Gas temperature (°C) | 67 | 101 | 102 | 48 |
| Moisture (%) | 6 | 4 | 4.5 | 5 |
| Residence time (min) | 9 | 5.5 | 5.5 | 14 |

The waste stream is blown directly into a vertical pipe of 20 meter high and with a diameter of 1.7 meter. The gas flow is about 18 m/s. On the bottom about 6 weight% of heavy material is collected. The amounts of collected heavy material depend on the pre-processing of the waste stream and the amount may be more or less. In any case, the dry mixture allows for an efficient separation of heavy material.

The mixture of gas and waste is forced to flow using two transport ventilators ; one in the air supply to the dryer, one in the air outlet behind the cyclone. The main waste stream is separated out from the gas flow into two successive cyclones.

The stream is subjected to a magnetic conveyer and eddy-current device separation, with which still 1 weight% of metals is separated out.

Small, non-combustible material is removed from the waste particle stream by transporting the thus obtained stream over a sieve, for which a moving sieve with a mesh size of 3 mm is used. About 3 weight% of fine sand and glass fragments are separated out.

Chlorine-containing components are separated out by a NIR detector coupled to a pneumatic conveyer separator. Herein, about 2 weight% of the material is separated out, with a chlorine content of 30 %, as a result of which the chlorine content in the main stream is reduced with 70 % to 0.6 weight%.

Subsequently, the waste stream is transported into a shredder, which cuts the particles into pieces with a length and width of maximum about 30 mm.

The thus obtained purified waste stream is converted into solid particles by means of pressure through a mould with an effective ratio hole length (L) to hole diameter (D) of more than 5, and preferably more than 7, wherein the temperature of the mixture is increased to about 100 - 115 °C or even 120 °C, depending on the waste stream and the speed of the press. The thus obtained pellets consist for about 93 weight% or more, in general about 95 weight% or more, of (partly molten) plastic and organic/cellulose fibre material with a small amount of inert material.

### EXAMPLES 5-8

In an analogous manner as in Examples 1-4, further processes are conducted but now to paper-reject with 10 weight% of inert material and a rotary dryer. The drying step is shown in Table 2. In Examples 7 and 8 an effluent gas is used which resulted from coal combustion. In Examples 5 and 6, the moisture content of the product feed mixture was adjusted such that in the product feed mixture a total moisture content of 31 weight% was maintained. Experiments wherein a reduced moisture content is used, lead to a temperature increase of product and gaseous medium at the dryer outlet.

**Table 2**

| Parameter | Ex.5 | Ex.6 | Ex.7 | Ex.8 |
|---|---|---|---|---|
| Product supply | | | | |
| Paper (weight%) | 15 | 45 | 31 | 28 |
| Moisture (weight%) | 31 | 31 | 31 | 31 |
| Plastic (weight%) | 44 | 14 | 28 | 31 |
| Inert (weight%) | 10 | 10 | 10 | 10 |

| Dryer inlet | | | | |
|---|---|---|---|---|
| Gas temperature (°C) | 150 | 150 | 150 | 150 |
| Gas flow (kNm³/h) | 200 | 200 | 200 | 200 |

| Dryer outlet | | | | |
|---|---|---|---|---|
| Product temperature | 89 | 86 | 89 | 84 |
| Gas temperature (°C) | 92 | 99 | 95 | 97 |
| Moisture (%) | 2 | 8 | 4.5 | 6.5 |
| Residence time (min) | 9.5 | 7.5 | 8.5 | 7 |

The waste stream is blown directly into a vertical pipe of 20 meter high and with a diameter of 1.7 meter. The gas flow is about 18 m/s. On the bottom about 3 weight% of heavy material is collected.

The stream is subjected to a magnetic band and eddy-current device separation, with which still 1 weight% of metal-containing parts is separated out.

Small, non-combustible material is removed from the waste particle stream by transporting the thus obtained stream over a sieve, for which a moving sieve with a mesh size of 3 mm is used. About 1 weight% of fine sand and glass fragments are separated out.

Chlorine-containing components are separated by a NIR detector coupled to a pneumatic band separator. Herein, about 3 weight% of the material is separated out, with a chlorine content of 30 %, as a result of which the chlorine content in the main stream is reduced with 70 % to 0.8 weight%.

Subsequently, the waste stream is transported to a shredder, which cuts the particles in pieces with a length and width of maximum about 30 mm.

The thus obtained purified waste stream is converted into solid particles by means of pressure through a mould with an effective ratio hole length (L) to hole diameter (D) of 10, wherein the temperature of the mixture is increased to about 110 - 115 °C, depending on the waste stream and the speed of the press. The thus obtained pellets consist for about 95 weight% or more of (partly molten) plastic and organic/cellulose fibre material with a small amount of inert material.

## Claims

1. Method for processing a mixture of cellulose/plastic waste particles comprising cellulose and thermoplastic materials, and wherein the cellulose and thermoplastic material constitutes at least 60 weight% of the waste mixture and wherein the thermoplastic material constitutes at least 20 weight% of the total weight of the waste mixture, which method comprises the following steps :
(a) drying the cellulose/plastic waste mixture by treatment with a medium with a temperature in the range of 50 to 150 °C, wherein the water content is reduced to 15 weight% or less ;
(b) wherein the exit temperature of the drying medium has a temperature of 115 °C or less,
(c) feeding the dried cellulose/plastic waste mixture to a purification stage, and
(d) subjecting the dried cellulose/plastic waste mixture to the operation of the purification stage, wherein the purification stage comprises at least one separator selected from the group of :
wind separator, sieve, metal separator, separator for separating out chlorine-containing components, or a combination thereof.

2. Method according to claim 1, wherein the purification step comprises a wind separator.

3. Method according to any one of the preceding claims, wherein the purification step comprises a sieve.

4. Method according to any one of the preceding claims, wherein the purification step comprises a chlorine-containing component separator based on NIR technology which is able to remove chlorine-containing plastic parts.

5. Method according to any one of the preceding claims, wherein the purification step comprises a metal separator.

6. Method according to any one of the preceding claims, wherein the purification step comprises at least two separators selected from any one of claims 2-5.

7. Method according to any one of the preceding claims, wherein the cellulose/plastic waste mixture is transported on a conveyer dryer in order to dry the mixture.

8. Method according to any one of the preceding claims, wherein the cellulose/plastic waste mixture is fed into a rotary dryer in order to dry the mixture.

9. Method according to any one of the preceding claims, wherein a dryer medium is used in a drying step, wherein the medium is heated using residual heat, and wherein the dryer medium is a gaseous medium.

10. Method according to any one of the preceding claims, wherein the water content of the cellulose/plastic mixture in step (a) is reduced to 10 weight% or less **and** to a value of 2 weight% or more.

11. Method according to any one of the preceding claims, wherein the cellulose/plastic waste mixture prior to step (a) is pre-treated by means of mechanical pressing to reduce the water content.

12. Method according to any one of the preceding claims, wherein the cellulose/plastic waste mixture, prior to entering step (a), consists of particles with a particle diameter of maximum 150 mm or less, and 60 mm or more.

13. Method according to any one of the preceding claims, further comprising compacting the purified cellulose/plastic waste mixture, such that pellets are obtained and optionally, further comprising pulverizing the pellets obtained from the compacting step, in order to obtain a powder.

14. Method according to any one of the preceding claims, wherein the mixture of cellulose/plastic originates from paper recycling.

## Patentansprüche

1. Verfahren zur Verarbeitung einer Mischung von Zellstoff-/Kunststoffabfallteilchen umfassend Zellstoff und thermoplastische Materialien, und wobei der Zellstoff und das thermoplastische Material wenigstens 60 Gew.% der Abfallmischung ausmacht und wobei das thermoplastische Material wenigstens 20 Gew.% des Gesamtgewichts der Abfallmischung ausmacht, wobei das Verfahren die folgenden Schritte umfasst:
(a) Trocknen der Zellstoff-/Kunststoffabfallmischung durch Behandlung mit einem Medium mit einer Temperatur im Bereich von 50 bis 150 °C, wobei der Wassergehalt auf 15 Gew.% oder weniger reduziert ist;
(b) wobei die Austrittstemperatur des Trocknungsmediums eine Temperatur von 115 °C oder weniger aufweist,
(c) Zuführen der getrockneten Zellstoff-/Kunststoffabfallmischung zu einem Reinigungsabschnitt, und
(d) Unterwerfen der getrockneten Zellstoff-/Kunststoffabfallmischung dem Betrieb des Reinigungsabschnitts, wobei der Reinigungsabschnitt wenigstens eine Abscheidevorrichtung umfasst, ausgewählt aus der Gruppe von: Windabscheider, Sieb, Metallabscheider, Abscheider zur Aussortierung von chlorenthaltenden Komponenten, oder eine Kombination davon.

2. Verfahren nach Anspruch 1, wobei der Reinigungsschritt einen Windabscheider umfasst.

3. Verfahren nach einem der vorhergehenden Ansprüche, wobei der Reinigungsschritt ein Sieb umfasst.

4. Verfahren nach einem der vorhergehenden Ansprüche, wobei der Reinigungsschritt einen Abscheider für chlorenthaltende Komponente basierend auf NIR-Technologie umfasst, der in der Lage ist, chlorenthaltende Kunststoffteile zu entfernen.

5. Verfahren nach einem der vorhergehenden Ansprüche, wobei der Reinigungsschritt einen Metallabscheider umfasst.

6. Verfahren nach einem der vorhergehenden Ansprüche, wobei der Reinigungsschritt wenigstens zwei Abscheider, ausgewählt aus einem der Ansprüche 2-5, umfasst.

7. Verfahren nach einem der vorhergehenden Ansprüche, wobei die Zellstoff-/Kunststoffabfallmischung auf einem Fördertrockner transportiert wird, um die Mischung zu trocknen.

8. Verfahren nach einem der vorhergehenden Ansprüche, wobei die Zellstoff-/Kunststoffabfallmischung in einen Rotationstrockner eingeleitet wird, um die Mischung zu trocknen.

9. Verfahren nach einem der vorhergehenden Ansprüche, wobei ein Trocknungsmedium in einem Trocknungsschritt verwendet wird, wobei das Medium unter Verwendung von Restwärme erwärmt wird, und wobei das Trocknungsmedium ein gasförmiges Medium ist.

10. Verfahren nach einem der vorhergehenden Ansprüche, wobei der Wassergehalt der Zellstoff-/Kunststoffabfallmischung in Schritt (a) auf 10 Gew.% oder weniger reduziert wird und auf einen Wert von 2 Gew.% oder mehr.

11. Verfahren nach einem der vorhergehenden Ansprüche, wobei die Zellstoff-/Kunststoffabfallmischung vor dem Schritt (a) durch mechanisches Pressen vorbehandelt wird, um den Wassergehalt zu reduzieren.

12. Verfahren nach einem der vorhergehenden Ansprüche, wobei die Zellstoff-/Kunststoffabfallmischung vor dem Eintreten in Schritt (a) aus Teilchen mit einem Teilchendurchmesser von maximal 150 mm oder weniger, und 60 mm oder mehr besteht.

13. Verfahren nach einem der vorhergehenden Ansprüche, ferner umfassend das Verdichten der gereinigten Zellstoff-/Kunststoffabfallmischung, so dass Presslinge erhalten werden und gegebenenfalls weiter umfassend Pulverisieren der aus dem Verdichtungsschritt erhaltenen Presslinge, um ein Pulver zu erhalten.

14. Verfahren nach einem der vorhergehenden Ansprüche, wobei die Mischung aus Zellstoff/Kunststoff aus dem Papierrecycling stammt.

## Revendications

1. Procédé pour le traitement d'un mélange de déchets particulaires de cellulose/matière plastique comprenant de la cellulose et des matières thermoplastiques, et dans lequel la cellulose et la matière thermoplastique constituent au moins 60 % en poids du mélange de déchets et dans lequel la matière thermoplastique constitue au moins 20 % en poids du poids total du mélange de déchets, lequel procédé comprend les étapes suivantes :
(a) sécher le mélange de déchets de cellulose/matière plastique par traitement par un milieu avec une température se situant dans la plage de 50 à 150°C, la teneur en eau étant réduite à 15 % en poids ou moins ;
(b) dans lequel la température de sortie du milieu de séchage a une température de 115°C ou moins ;
(c) adresser le mélange séché de déchets de cellulose/matière plastique à un stade de purification ; et
(d) soumettre le mélange séché de déchets de cellulose/matière plastique à l'opération du stade de purification,
dans lequel le stade de purification comprend au moins un séparateur choisi dans le groupe de : séparateur à vent, tamis, séparateur de métaux, séparateur pour séparer des composants à teneur en chlore, ou une combinaison de ceux-ci.

2. Procédé selon la revendication 1, dans lequel l'étape de purification comprend un séparateur à vent.

3. Procédé selon l'une quelconque des revendications précédentes, dans lequel l'étape de purification comprend un tamis.

4. Procédé selon l'une quelconque des revendications précédentes, dans lequel l'étape de purification comprend un séparateur de composants à teneur en chlore sur la base d'une technologie NIR qui est capable de retirer des parties de matière plastique à teneur en chlore.

5. Procédé selon l'une quelconque des revendications précédentes, dans lequel l'étape de purification comprend un séparateur de métaux.

6. Procédé selon l'une quelconque des revendications précédentes, dans lequel l'étape de purification comprend au moins deux séparateurs choisis parmi l'une quelconque des revendications 2 à 5.

7. Procédé selon l'une quelconque des revendications précédentes, dans lequel le mélange de déchets de cellulose/matière plastique est transporté sur un transporteur séchoir de façon à sécher le mélange.

8. Procédé selon l'une quelconque des revendications précédentes, dans lequel le mélange de déchets de cellulose/matière plastique est introduit dans un séchoir rotatif de façon à sécher le mélange.

9. Procédé selon l'une quelconque des revendications précédentes, dans lequel un milieu de séchage est utilisé dans une étape de séchage, dans lequel le milieu est chauffé à l'aide de chaleur résiduelle, et dans lequel le milieu de séchage est un milieu gazeux.

10. Procédé selon l'une quelconque des revendications précédentes, dans lequel la teneur en eau du mélange de cellulose/matière plastique à l'étape (a) est réduite à 10 % en poids ou moins et à une valeur de 2 % en poids ou plus.

11. Procédé selon l'une quelconque des revendications précédentes, dans lequel le mélange de déchets de cellulose/matière plastique avant l'étape (a) est prétraité au moyen d'un pressage mécanique pour réduire la teneur en eau.

12. Procédé selon l'une quelconque des revendications précédentes, dans lequel le mélange de déchets de cellulose/matière plastique, avant d'entrer dans l'étape (a), consiste en particules ayant un diamètre de particule de 150 mm maximum ou moins, et de 60 mm ou plus.

13. Procédé selon l'une quelconque des revendications précédentes, comprenant en outre le compactage du mélange purifié de déchets de cellulose/matière plastique de telle sorte que des pastilles sont obtenues, et facultativement, comprenant en outre la pulvérisation des pastilles obtenues à partir de l'étape de compactage, de façon à obtenir une poudre.

14. Procédé selon l'une quelconque des revendications précédentes, dans lequel le mélange de cellulose/matière plastique provient du recyclage du papier.
